# EUROPÄISCHE PATENTSCHRIFT

(11) **EP 2 173 798 B1**
(45) Veröffentlichungstag und Bekanntmachung des Hinweises auf die Patenterteilung: **23.02.2011**
(21) Anmeldenummer: 08801118.4
(22) Anmeldetag: 28.07.2008
(51) Int. Cl.: C08J 9/224, H01Q 17/00

(54) **VERFAHREN ZUR HERSTELLUNG EINES ABSORBERS FÜR MIKROWELLEN UND DANACH HERGESTELLTER ABSORBER**
METHOD FOR PRODUCING AN ABSORBER FOR MICROWAVES AND ABSORBER PRODUCED ACCORDING TO THE METHOD
PROCÉDÉ DE FABRICATION D'UN ABSORBEUR DE MICRO-ONDES ET ABSORBEUR FABRIQUÉ PAR CE PROCÉDÉ

(30) Priorität: 28.07.2007 DE 102007035560
(43) Veröffentlichungstag der Anmeldung: 14.04.2010
(73) Patentinhaber: Glatt Systemtechnik GmbH, 01277 Dresden (DE)
(72) Erfinder: CORNELIUS, Hans-Dieter, 01217 Dresden (DE)
(74) Vertreter: Pätzelt, Peter
(86) Internationale Anmeldenummer: PCT/DE2008/001282
(87) Internationale Veröffentlichungsnummer: WO 2009/015661

(56) Entgegenhaltungen:
- EP-A- 0 425 886
- DE-A1- 2 617 698
- JP-A- 11 302 614
- JP-A- 60 141 732

## Beschreibung

### Technisches Gebiet

Die Erfindung betrifft ein Verfahren zur Herstellung eines Absorbers für Mikrowellen nach dem Oberbegriff des Anspruchs 1 sowie einen danach hergestellten Absorber für Mikrowellen mit einer weiten Bandbreite (1-100 GHz). Derartige Absorber können überall dort vorteilhaft eingesetzt werden, wo ohne Transmission Reflexionskoeffizienten von >20 dB auch im Fernfeld verlangt werden. Dabei handelt es sich um einen quasi, geschlossenzelligen Schaumabsorber, mit dem auch ebene Flächenformen realisiert werden können.

### Stand der Technik

Nach dem Stand der Technik sind verschiedene Lösungen zur Absorption von Mikrowellen bekannt. Beispielsweise beschreibt die DE 296 21 804 U1 eine Strahlung absorbierendes Material, bestehend aus einem feinkörnigen Bestandteil, z.B. ein Polymer, Glas, Gestein oder Keramik mit geringer Dichte, und einen elektrisch leitenden Bestandteil, die mit einem Bindemittel verbunden sind. Der feinkörnige Bestandteil kann expandierte Polystyrolkörner aufweisen.
Die DE 2 617 698 A1 beschreibt elektrisch leitfähige Schaumstoff-Formkörper, hergestellt aus elektrisch leitfähigen Polystyrol-Perlen..

### Darstellung der Erfindung

Der Erfindung liegt die Aufgabe zugrunde, ein Verfahren zur Herstellung eines Absorbers für Mikrowellen, bestehend aus einer Packung von Körpern aus expandiertem Polystyrol, in der Folge als EPS-Körper bezeichnet, auf denen eine Beschichtung aus ferromagnetischem Material aufgebracht ist, anzugeben, mit dem ohne Transmission ein Reflexionskoeffizient von >20 dB erreicht wird und somit der auswertbare Radarquerschnitt klein bleibt. Weiterhin soll ein Absorber für Mikrowellen angegeben werden, welcher mit einem erfindungsgemäßen Verfahren hergestellt wurde.

Die Erfindung löst die Aufgabe für das Verfahren durch die im Anspruch 1 angegebenen Merkmale. Die Aufgabe für einen Absorber wird durch die Merkmale des Anspruchs 6 gelöst. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Der Absorber für Mikrowellen wird aus einer Packung von EPS-Körpern, auf denen eine Beschichtung aus ferrimagnetischem Material aufgebracht ist, aufgebaut. Die EPS-Körper haben den Vorteil, dass der transmissionshemmende Einfluss, bedingt durch die werkstoffabhängige, geringe Dielektrizitätszahl des Polystyrols und das sehr kleine Masse Volumenverhältnis, hervorgerufen durch die Expansion des Polystyrols, vernachlässigbar klein und somit für Mikrowellen praktisch durchsichtig ist.

Bei einer Packung von mit einem ferrimagnetischen Material beschichteten EPS-Körpern verringert sich der auswertbare Radarquerschnitt erfindungsgemäß aus den folgenden Gründen. Der erste Grund ist, dass die Packung eine große Anzahl von Wänden aus ferromagnetischem Material aufweist und bei Frequenzen von <15 GHz ist die Eindringtiefe noch so groß, dass eine Vielzahl von Kugeln bei entsprechend geringen Schichtdicken von den Mikrowellen durchstrahlt werden und somit an den Grenzflächenübergängen von ferrimagnetischem Material zu EPS-Körpern eine fraktionierte Dämpfung der Mikrowellen durch diffuse Reflexion stattfindet, was letztlich zu einer Absorption der Mikrowellen führt. Zusätzlich ist das absorptionsfähige ferrimagnetische Material als schaumähnliche Absorptionsfläche über das gesamte Volumen der Packung verteilt. Die Anzahl der EPS-Körpern ist dabei möglichst groß zu wählen. Der zweite Grund zur Verringerung des auswertbaren Radarquerschnittes ist gegeben, wenn das Relief der angestrahlten Packungsoberfläche durch die Kalotten der kugelförmigen EPS-Körper gebildet wird. Eines solche Packungsoberfläche entsteht, wenn die kugelförmigen EPS-Körpern als hexagonal gepackte Monolage angeordnet werden. Die Packungsoberfläche ist dann gegenüber ebenen Flächengebilden um das zweifache größer und erhöht das Absorptionsvermögen auch bei Frequenzen von >15 GHz, wo bedingt durch die abnehmende Eindringtiefe eine Absorption fast ausschließlich nur noch in den oberflächennahen Bereichen stattfindet. Der Nachteil der vergrößerten Reflexionsfläche ist dabei unbedeutend, da die Kalottenform eine diffuse Reflexion auslöst und damit der auswertbare Radarquerschnitt klein bleibt. Die diffuse Reflexion bleibt bei einfallender Strahlung innerhalb eines Azimutes von 170°, bedingt durch die Kallottenform, konstant. Der Durchmesser der beschichteten, kugelförmigen EPS-Körper ist dann zwecks Auslösen der diffusen Reflexion in Abhängigkeit von der Wellenlänge entsprechend anzupassen.

Wenn anwendungsbedingt die Dicke der Packung begrenzt ist, kann die noch vorhandene Transmission von Mikrowellen durch die Packung mittels einer gegenüber den EPS-Körpern isolierte, metallische Schutzfolie an der gegenüber den einfallenden Strahlen abgewandten Seite verhindert werden. Die an der Schutzfolie reflektierten Mikrowellen werden anschließend beim Durchdringen der Packung in umgekehrter Richtung absorbiert.

Verfahrensgemäß wird der Absorber hergestellt, indem als EPS-Körper solche mit einem Restanteil von Pentan ausgewählt werden. Die EPS-Körper werden mit einem Polymer umhüllt, so dass die Diffusion von Pentan aus den EPS-Körpern bei Temperaturen kleiner 100°C behindert wird. Als Beschichtung aus ferrimagnetischem Material wird in der Folge eine Mischung aus einer polymeren Matrix und einem ferrimagnetischen Pulver aufgebracht. Die derart beschichteten EPS-Körper werden in eine technologisch vorgegebene Form eingebracht und in der Form einem Wasserdampfstrom mit einer Temperatur über 100° C ausgesetzt bis der Restanteil von Pentan verdampft ist und die EPS-Körper aufgebläht sind. Abhängig von der verwendeten polymeren Matrix gemäß Anspruch 3 wird diese entweder durch den Wassersdampf wieder angelöst oder infolge des Wärmeeintrages erweicht, beide Effekte führen letztlich dazu, dass die beschichteten EPS-Körper miteinander verklebt werden. Durch das Aufblähen der beschichteten EPS-Körper wird die offene Porosität beseitigt, die Klebefläche vergrößert und somit zusätzlicher Klebstoff vermieden. Diese vorteilhafte Lösung ist besonders deshalb vorteilhaft, da jeder weitere Klebstoffanteil das Eindringvermögen der Mikrowellen verringert.

Als EPS-Körper werden solche mit einem Durchmesser von 0,5 bis 10 mm ausgewählt. Dabei werden die Kugeldurchmesser innerhalb der Packung so unterschiedlich ausgewählt, dass eine möglichst maximale Kugelanzahl pro Volumeneinheit vorliegt.

Als ferrimagnetisches Material werden Partikel metalloxydischer Festkörperordnungen verwendet, die bei hohen Anfangspermeabilitäten kleine Koerzitivfeldstärken aufweisen. Gegeben ist unabhängig von der Partikelgröße diese Bedingung bei weichmagnetischen, kristallinen Werkstoffen wie z.B. Spinellen aus Mn-Zn-Ferrit. Die Partikelgröße wird durch den Beschichtungsprozess bestimmt und sollte beim Aufsprühen in Verbindung mit der wässrigen Dispersion aus Copolymerisaten bei < 5 Mikrometer liegen. Metalloxydische Festkörperordnungen mit hexagonaler Gitterstruktur, z.B. Sr-Ferrit bzw. Ba-Ferrit, besitzen gegenüber Spinellen zu hohe Koerzitivfeldstärken und werden von der einfallenden elektromagnetischen Welle im Fernfeld, d.h. bei Strahlungsenergien von ca. 10 mW, nicht energetisch so angeregt, dass eine Ummagnetisierung stattfinden kann. Deshalb müssen diese Ferrite, z.B. Sr-Ferrit als M-Typ, bis zu einer Partikelgröße von <500 nm mittels Mahlen verkleinert werden, erst dann erreichen sie Koerzitivfeldstärken von <50 kA/m, d.h. analog den Werten von weichmagnetischen Werkstoffen. Diese gemahlenen hexagonalen Ferrit werden vorwiegend bei Absorbern für Frequenzen von >15 GHz eingesetzt, da gegenüber den Spinellen die mit erforderliche, frequenzabhängige Permeabilität noch groß genug ist.

Die ausgewählten Partikel des ferrimagnetischen Materials sind allgemein pulverförmig und weisen abhängig von den beschriebenen Anwendungsfällen eine mittlere Größe von 200 nm bis 5 µm Durchmesser auf.

Die ferrimagnetischen Partikel sind in einer polymeren Matrix eingebettet. Dabei verklebt die polymere Matrix nicht nur die Partikel untereinander, sondern verhindert auch, dass der direkte Flächenkontakt zwischen den Partikeln infolge Agglomeratbildung eingeschränkt wird. In Abhängigkeit von dem komplexen Widerstand der verwendeten ferrimagnetischen Partikel, wird durch Zumischen von Kohlestoffpartikeln, z.B. Ruß, die Leitfähigkeit des Polymers angepasst.

Die EPS-Körper werden vor der Beschichtung mit der polymeren Matrix mit einer wässrigen Polyvinylalkohol-Lösung sprühbeschichtet und im Luftstrom bei 60°C getrocknet. Der so entstandene Filmüberzug dient als zusätzliche Barriere und verhindert mit das vorzeitige Ausdiffundieren des Pentans aus den EPS-Körpern.

Für die polymere Matrix hat sich bei der Verwendung von Spinellferriten, z.B. Mn-Zn-Ferrit, Polyvinylacetat, dass als wässrige Dispersion pH-Werte von =<7 aufweist, bewährt, dem zusätzlich ein Polyisocyanat-Vernetzer zugesetzt werden kann. Demgegenüber ist bei der Verwendung von hexagonalen Ferriten, z.B. Sr-Ferrit als M-Typ, eine polymere Matrix aus Styrol-Butadien-Copolymerisaten bzw. Acrylsäureester-Styrol-Copolymerisaten notwendig. Die davon wässrigen Dispersionen von Styrol-Butadien-Copolymerisaten besitzen Dispergierungsmittel mit pH-Werten von >7 und schränken durch den OH-Ionen-Überschuss die Bildung von Sr-Ionen ein. Des Weiteren ist deren Verwendung auch deshalb sinnvoll, da diese Copolymerisate gegenüber dem Polyvinyacetat eine geringere Dielektrizitätszahl aufweisen, was bei Frequenzen von > 15GHz verbunden mit der geringeren Eindringtiefe von Vorteil ist.

Der verfahrensgemäß hergestellte Absorber besteht aus einer Packung mit einem ferrimagnetischen Pulver innerhalb einer polymeren Matrix beschichteten EPS-Körpern, die der äußeren Struktur einer technologisch eingesetzten Form entspricht.

Der Absorber kann einen flächigen Gitterträger aus eckigen oder tubusförmigen Waben aufweisen, in dem die beschichteten EPS-Körper in mindestens einer Monolage eingeklebt sind.

Der Absorber aus gepackten, beschichteten EPS-Körpern oder diese aufgebaut als Monolage in flächigen Gittern mit einer Beschichtung aus Partikeln ferrimagnetischen Materials besitzen in einem weiten Bandbereich (1-100 GHz) für Mikrowellen ein hohes Absorptionsvermögen und aufgebaut als Monolage zusätzlich diffuse Reflexionseigenschaften, die den auswertbaren Radarquerschnitt verkleinern. Die gepackten, beschichteten EPS-Körper haben eine kleine Masse, geringe Wärmeleitfähigkeit und auch ein hohes Schallabsorptionsvermögen. Mit diesen Eigenschaften kann das Produkt "Absorber für Mikrowellen" in vorteilhafter Weise auch für andere Endprodukte hergestellt und eingesetzt werden. Dementsprechend ist der Absorber nach Anspruch 8 ein Element zur Verringerung der Masse und der Wärmeleitfähigkeit oder zur Erhöhung des Schallabsorptionsvermögens eines Endproduktes.

### Ausführungsbeispiele

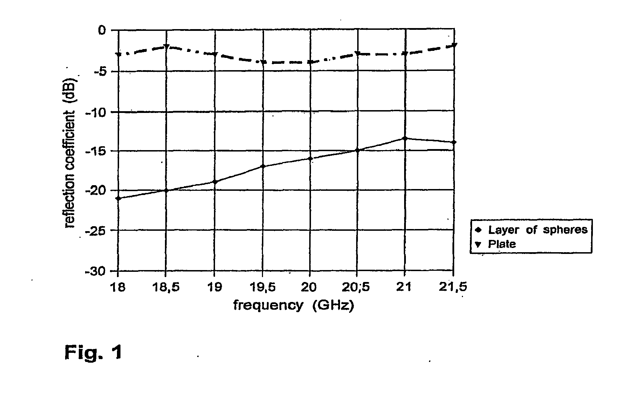

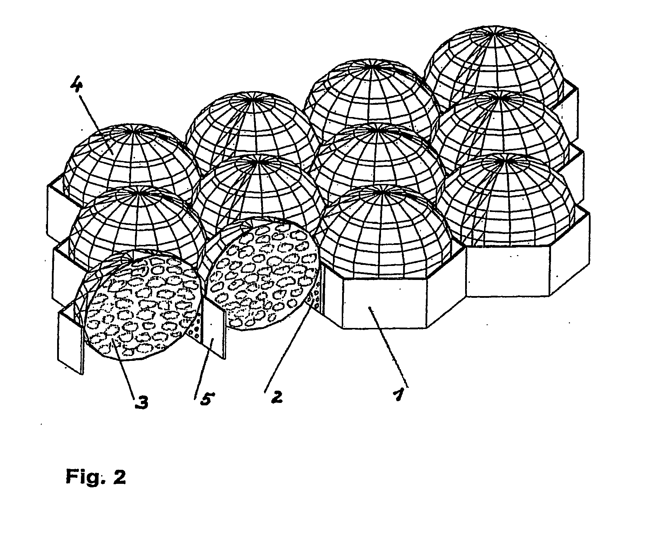

Die Erfindung wird nachstehend an zwei Ausführungsbeispielen näher erläutert. Figur 1 zeigt ein Diagramm mit den Reflexionskoeffizienten in Abhängigkeit von der Frequenz. Zugehörig zum Ausführungsbeispiel II zeigt die Figur 2 einen perspektivischen Schnitt durch einen erfindungsgemäß hergestellten Absorber.

### Ausführungsbeispiel I

Im Ausführungsbeispiel I wird das erfindungsgemäße Verfahren zur Herstellung eines Absorbers für Mikrowellen bis < 15 GHz näher beschrieben, wobei der Absorber eine vorgegebene, hier nicht näher definierte Form, aufweisen soll.

Ausgewählt werden EPS-Körper mit einem mittleren Durchmesser von 6 mm, die noch einen Restanteil von Pentan enthalten.

Zunächst werden die noch expansionsfähigen EPS-Körper (Styroporkugeln) mit einer wässrigen Polyvinylalkohol-Lösung sprühbeschichtet und im Luftstrom bei 60°C getrocknet. Mit diesem Verfahrensmerkmal soll verhindert werden, dass infolge weiterer Verfahrensschritte das noch vorhandene Pentan im expandierten Polystyrol entweicht, mindestens jedoch behindert wird.

Danach erfolgt die weitere Beschichtung mit einer Mischung aus einer polymeren Matrix und pulverisierten Spinellen aus Mn-Zn-Ferriten, als ferrimagnetisches Material. Als Ausgangsmaterial für die nachfolgende Sprühbeschichtung wird eine sog. Slurry vorbereitet. Sie besteht aus einer wässrigen Dispersion von Polyvinylaceat und einem Polyisocyanat-Vernetzer, in der das pulverförmige, ferrimagnetische Material eingemischt ist. Während der Sprühbeschichtung muss die Slurry permanent gerührt werden, sonst dekantieren die ferrimagnetischen Partikel und es kommt zur Entmischung. Die derart beschichteten EPS-Körper werden im Luftstrom bei 80°C getrocknet. Durch den Wasserentzug entsteht die polymere Matrix aus Polyvinylaceat und verklebt die ferrimagnetischen Partikel miteinander. Die optimale Absorption wird erreicht, wenn die EPS-Körper-Packung eine Dicke von 50 mm und die Beschichtung auf den einzelnen EPS-Körpern eine Stärke von ca. 0,1 mm aufweist. Dabei ist die Transmission bei einer Packungsdicke von 50 mm nicht mehr nachweisbar.

Die angesetzte, wässrige Slurry besteht aus folgenden Festoffanteilen: 70 Gew.-% Mn-Zn-Ferritpulver mit einer Partikelgröße von kleiner 5 Mikrometer, 25 Gew.-% Polyvinylacetat und Polyisocyanat-Vernetzer und 5 Gew.-% Acetylenruß.

Anschließend werden die beschichteten EPS-Körper in eine verschließbare Form eingebracht, die das Negativ des herzustellenden Formkörpers abbildet. In der Form werden die beschichteten EPS-Körper mit Wasserdampf beaufschlagt, der eine Temperatur von 115°C (der übliche Bereich liegt zwischen 100 und 130°C). Der Wärmeeintrag führt dazu, dass die EPS-Körper elastisch werden und mit Hilfe des steigenden Pentandampfdruckes aufbläht werden, die noch offene Porosität beseitigt und die Berührungsflächen der EPS-Körper vergrößert. Der heiße Wasserdampf führt weiterhin auch dazu, dass die polymere Matrix und die Barriereschicht aus Polyvinylalkohol elastisch und teilweise abgelöst wird, so dass das Aufblähen der EPS-Körper nicht beeinträchtigt wird. Unter dem Verformungsdruck werden die zusammengepressten, beschichteten EPS-Körper mit Hilfe der Polymere miteinander verklebt. Der Polyisocyanat-Vernetzer ist dabei so bemessen, dass die polymere Matrix im heißem Wasserdampf nur partiell angelöst wird und elastisch bleibt.

Abschließend wird die gesamte Packung von beschichteten EPS-Körpern in der Form bei 100°C getrocknet und der fertiggestellte Absorber kann aus der Form entfernt werden.

Figur 1 zeigt beispielhaft für einen verfahrensgemäß hergestellten Absorber den Reflexionskoeffizienten in Abhängigkeit von der Frequenz bei nicht nachweisbarer Transmission. Die einfallende Strahlungsleistung betrug 10 mW. Die Packungsdicke liegt bei 50 mm.

### Ausführungsbeispiel II

In Ausführungsbeispiel II wird die Herstellung eines flexiblen Absorbers beschrieben, bei dem die beschichteten EPS-Körper als Monolage angeordnet sind und der für Frequenzen von >15 GHz eingesetzt werden kann. Die zugehörige Zeichnung Figur 2 zeigt einen Teilschnitt durch den Absorber mit den in den Gitterträger positionierten, beschichteten EPS-Körpern, bevor in einen weiteren Verfahrensschritt die beschichteten EPS-Körper mittels Wasserdampf bei 125°C aufgebläht werden und die offene Porosität zwischen den Wabenwänden und den beschichteten EPS-Körpern verschlossen wird. Unter Anwendung des Verfahrens ist der Absorber auf einem ebenen elastischen Gitterträger 1 aus Kunststoff mit wabenförmiger Struktur aufgebaut. Figur 2 zeigt weiter mit der Positionsnummer 2 einen Klebstoff, die beschichteten EPS-Körper 3, die Kugelkalotte 4 und die Wände 5 des Gitterträgers 1.

Ausgewählt werden EPS-Körper mit einem mittleren Durchmesser von 3,2 mm, die noch einen Restanteil von Pentan enthalten und als Einzelkugel, bezogen auf deren Durchmesser, in etwa die sechseckige Wabengitteröffnung ausfüllen.

Zunächst werden die EPS-Kugeln analog Ausführungsbeispiel I mit einer wässrigen Polyvinylalkohol-Lösung sprühbeschichtet und im Luftstrom bei 60°C getrocknet.

Da es sich um die Absorption von elektromagnetischen Wellen mit Frequenzen größer > 15 GHz handelt, ist es erforderlich die polymere Matrix und das ferrimagnetische Material gegenüber Ausführungsbeispiel I zu verändern. Als Ausgangsmaterial für die nachfolgende Sprühbeschichtung wird eine so genannte Slurry vorbereitet. Sie besteht aus einer wässrigen Dispersion von Styrol-Butadien-Copolymerisaten in der das pulverförmige, ferrimagnetische Material aus Sr-Ferrit als M-Typ eingemischt ist. Während der Sprühbeschichtung muss die Slurry permanent gerührt werden, sonst dekantiert trotz der gegenüber dem Ausführungsbeispiel I geringerer Partikelgröße das ferrimagnetische Material und es kommt zur Entmischung.

Die derart beschichteten EPS-Körper werden im Luftstrom bei 80°C getrocknet. Durch den Wasserentzug entsteht die polymere Matrix aus Styrol-Butadien-Copolymerisat und verklebt die ferrimagnetischen Partikel bzw. Gruppen von agglomerierten Partikeln miteinander. Die optimale Absorption, d.h. es findet auch keine Transmission statt, wird bei Frequenzen von > 70 GHz erreicht, wenn die Dicke der Beschichtung auf den einzelnen beschichteten EPS-Körper 3 ca. 0,1 mm beträgt.

Zur Herstellung des Absorbers wurde als Gitterträger 1 ein so genannter Honeycomb ausgewählt, der den Aufbau der hexagonal gepackten Monolage unterstützt. Honeycombs sind wabenförmige Sechseckstrukturen aus Polyamid-Papier und besitzen, auch bedingt durch ihre geringe Masse, eine Dielektrizitätszahl von < 2. Die Wabenhöhe ist 1,5 mm, d.h. in etwa das 0,5-fache des Durchmessers der verwendeten EPS-Körper. Vor dem Einbringen der beschichteten EPS-Körper werden die sechseckigen Wabenöffnungen mit einen flüssigen, lösemittelhaltigen Styrol-Budatien-Copolymerisat als Klebstoff 2 besprüht. Danach werden die beschichteten EPS-Körper 3 in die Öffnungen der Wabe gedrückt, anhaftender Klebstoff 2 auf den Stirnseiten der Wabenwände wird durch die Kugeln mit in den Wandbereich der Wabe geschoben. Bedingt durch das Verhältnis Wabenhöhe/Kugeldurchmesser = ca. 0,5 ragt ein Teil des Kugelkörpers als Kalottenoberflächen 4 über Wabenhöhenniveau heraus und es entsteht die für die Absorption und diffusen Reflexion der einfallenden Strahlen notwendige Monolagenoberfläche. Die so gestaltete Monolagenoberfläche hat somit wie vorausgesetzt keinen zusätzlichen Klebstoff auf den Kalottenoberfächen, da sich der Klebstoff 2 nur an den Wänden 5 der Wabe befindet.

In Fortsetzung des erfindungsgemäßen Verfahrens wird der Gitterträger mit der eingelegten Monolage von beschichteten EPS-Körpern in einen verschließbaren Behälter eingebracht, der dazu dient, Wasserdampf mit einer Temperatur von 125 °C durch die offene Porosität zwischen den beschichteten EPS-Körpern und der Wabenwände zu leiten. Wie schon im Ausführungsbeispiel I bewirkt der Restanteil von Pentan in den beschichteten EPS-Körpern, dass sich diese aufblähen, gegen die Wabenwand gedrückt und mit dieser verklebt werden. Auch die überstehenden Kalotten nähern sich infolge Durchmessererweiterung gegenseitig an, so dass der für die Strahlen "sichtbare" Teil von Wabenstegen auch im schlechtesten Fall, wenn die elektromagnetische Strahlung orthogonal zur Wabenfläche die Monolage erreicht, einen minimalen Wert erreicht. Der an der Wabenwand befindliche Klebstoff verhindert, dass die vorher eingenommene Ausgangsposition innerhalb des Wabengitters eingehalten wird. Der Absorber kann dann aus dem verschließbaren Behälter entnommen und im Luftstrom bei 110°C getrocknet werden.

Der Absorber ist außerordentlich flexibel und kann im Einsatz gut an die technologischen Einrichtungen angepasst werden und ist ab 70 GHz einsetzbar.

Der vorstehende Absorber mit einer Monolage von beschichteten EPS-Körpern 2 auf einem Gitterträger 1 kann leicht modifiziert werden, wenn im Einsatzfall die Frequenz zwischen 15 und 70 GHz liegt, indem zwei Lagen von beschichteten EPS-Körpern bei entsprechend größerer Wabenhöhe angeordnet werden oder analog Anwendungsbeispiel I eine zusätzliche Kugelpackung, aber mit der polymeren Matrix und den ferrimagnetischen Material nach Ausführungsbeispiel I, gegenüber den einfallenden Strahlen abgewandten Seite der Monolage platziert wird.

## Patentansprüche

1. Verfahren zur Herstellung eines Absorbers für Mikrowellen, bestehend aus einer Packung expandierter Polystyrolkörper (EPS-Körper), auf denen eine Beschichtung aus ferrimagnetischen Partikeln aufgebracht ist, **dadurch gekennzeichnet, dass** in der Folge
- EPS-Körper mit einem Restanteil von Pentan ausgewählt werden,
- eine wässrigen Polyvinylalkohol-Lösung aufgebracht und anschließend im Luftstrom bei 60°C getrocknet wird, so dass sich eine Umhüllung aus synthetischem Polymer ausbildet, die das Ausdiffundieren von Pentan bei Temperaturen kleiner 100°C behindert,
- Aufbringung einer Mischung aus einer wässrigen Dispersion von Copolymerisaten und ferrimagnetischen Partikeln,
- Trocknung der beschichteten EPS-Körper, so dass sich die aufgebrachte Mischung in eine polymere Matrix umwandelt, in die ferrimagnetische Partikel eingebettet sind,
- Einbringung der beschichteten EPS-Körper in eine technologisch vorgegebene Form und
- Einleitung eines Wasserdampfstromes mit einer Temperatur über 100° C in die Form, so dass die EPS-Körper durch den Dampfdruck vom Restanteil des Pentans ihre endgültige Größe und Form einnehmen.

2. Verfahren nach Anspruch 1, **dadurch gekennzeichnet, dass** als wässrige Dispersion von Copolymerisaten ein Polyvinylacetat mit einem Polyisocyanat-Vernetzer, eine wässrige anionische Dispersion eines carboxylierten Styrol-Butadien-Copolymerisates oder eine feindisperse, wässrige Dispersion eines Acrylsäureester-Styrol-Copolymerisates, die ein anionisches Emulgatorsystem aufweist, verwendet wird.

3. Verfahren nach Anspruch 1 oder 2, **dadurch gekennzeichnet, dass** die Mischung wässriger Dispersion von Copolymerisaten und ferrimagnetischen Partikeln aus folgenden Feststoffanteilen hergestellt wird: 5-40 Gew-% Polymerisat, 2-5 Gew-% Acetylenruß und 93-55 Gew-% ferrimagnetische Partikel.

4. Verfahren nach einem der Ansprüche 1 bis 3, **dadurch gekennzeichnet, dass** als EPS-Körper solche mit kugelförmiger Form und mit einem Durchmesser von 0,5 bis 10 mm ausgewählt werden.

5. Verfahren nach einem der Ansprüche 1 bis 4, **dadurch gekennzeichnet, dass** als ferrimagnetisches Pulver solches mit einer Partikelgröße von 200 nm bis 15 µm ausgewählt wird.

6. Absorber für Mikrowellen, hergestellt mit einem Verfahren nach einem der Ansprüche 1 bis 5, bestehend aus einer Packung EPS-Körper, die mit einem ferrimagnetischen Pulver innerhalb einer polymeren Matrix beschichtet sind und dessen äußere Struktur einer technologisch eingesetzten Form entspricht.

7. Absorber nach Anspruch 6, **dadurch gekennzeichnet, dass** der Absorber einen flächigen Gitterträger (1) aus eckigen oder tubusförmigen Waben aufweist, in dem die EPS-Körper (3), die mit einem ferrimagnetischen Pulver innerhalb einer polymeren Matrix beschichtet sind, in mindestens einer Monolage eingeklebt sind.

8. Absorber nach Anspruch 6 oder 7, **dadurch gekennzeichnet, dass** der Absorber ein Element zur Verringerung der Masse und der Wärmeleitfähigkeit oder zur Erhöhung des Schallabsorptionsvermögens eines Endproduktes ist.

## Claims

1. Process for producing an absorber for microwaves, consisting of a packing of expanded polystyrene bodies (EPS bodies), to which a coating composed of ferrimagnetic particles has been applied, **characterized in that**, in this sequence,
- EPS bodies with a residual content of pentane are selected,
- an aqueous polyvinyl alcohol solution is applied and then dried in an air stream at 60°C, so as to form a coating of synthetic polymer which hinders the outward diffusion of pentane at temperatures less than 100°C,
- applying a mixture of an aqueous dispersion of copolymers and ferrimagnetic particles,
- drying the coated EPS bodies such that the mixture applied is converted to a polymeric matrix into which ferrimagnetic particles are embedded,
- introducing the coated EPS bodies into a technologically predefined form and
- introducing a steam stream with a temperature above 100°C into the mould, such that the EPS bodies assume their final size and shape as a result of the vapour pressure of the residual content of pentane.

2. Process according to Claim 1, **characterized in that** the aqueous dispersion of copolymers used is a polyvinyl acetate with a polyisocyanate crosslinker, an aqueous anionic dispersion of a carboxylated styrene-butadiene copolymer or a fine aqueous dispersion of an acrylic ester-styrene copolymer which has an anionic emulsifier system.

3. Process according to Claim 1 or 2, **characterized in that** the mixture of aqueous dispersion of copolymers and ferrimagnetic particles is produced from the following solid components: 5-40% by weight of polymer, 2-5% by weight of acetylene black and 93-55% by weight of ferrimagnetic particles.

4. Process according to any of Claims 1 to 3, **characterized in that** the EPS bodies selected are those with spherical shape and with a diameter of 0.5 to 10 mm.

5. Process according to any of Claims 1 to 4, **characterized in that** the ferrimagnetic powder selected is that having a particle size of 200 nm to 15 µm.

6. Absorber for microwaves, produced by a process according to any of Claims 1 to 5, consisting of a packing of EPS bodies which have been coated with a ferrimagnetic powder within a polymeric matrix, and the outward structure of which corresponds to a technologically used form.

7. Absorber according to Claim 6, **characterized in that** the absorber has a flat grid support (1) composed of angular or tubular honeycombs, in which the EPS bodies (3) which have been coated with a ferrimagnetic powder within a polymeric matrix have been adhesive bonded in at least one monolayer.

8. Absorber according to Claim 6 or 7, **characterized in that** the absorber is an element for reducing the mass and the thermal conductivity, or for increasing the sound absorption capacity, of an end product.

## Revendications

1. Procédé de fabrication d'un absorbeur pour micro-ondes, constitué d'un garnissage de corps en polystyrène expansé (corps EPS), sur lesquels un revêtement de particules ferrimagnétiques est appliqué, **caractérisé en ce que** consécutivement
- des corps EPS contenant une fraction résiduelle de pentane sont choisis,
- une solution aqueuse d'alcool polyvinylique est appliquée, puis séchée dans un courant d'air à 60 °C, de manière à former une enveloppe de polymère synthétique qui empêche la diffusion du pentane à des températures inférieures à 100 °C,
- l'application d'un mélange d'une dispersion aqueuse de copolymères et de particules ferrimagnétiques,
- le séchage des corps EPS revêtus, de manière à ce que le mélange appliqué se transforme en une matrice polymère dans laquelle les particules ferrimagnétiques sont incorporées,
- l'introduction des corps EPS revêtus dans un moule technologiquement prédéterminé et
- l'introduction d'un courant de vapeur d'eau ayant une température supérieure à 100 °C dans le moule, de manière à ce que les corps EPS prennent leur taille et forme finale par la pression de vapeur de la fraction résiduelle du pentane.

2. Procédé selon la revendication 1, **caractérisé en ce qu'**un polyacétate de vinyle avec un agent de réticulation polyisocyanate, une dispersion anionique aqueuse d'un copolymère styrène-butadiène carboxylé ou une dispersion aqueuse finement dispersée d'un copolymère ester de l'acide acrylique-styrène, qui comprend un système émulsifiant anionique, est utilisé en tant que dispersion aqueuse de copolymères.

3. Procédé selon la revendication 1 ou 2, **caractérisé en ce que** le mélange de la dispersion aqueuse de copolymères et de particules ferrimagnétiques est fabriqué à partir des proportions de solides suivantes : 5 à 40 % en poids de polymère, 2 à 5 % en poids de suie d'acétylène et 93 à 55 % en poids de particules ferrimagnétiques.

4. Procédé selon l'une quelconque des revendications 1 à 3, **caractérisé en ce que** des corps EPS ayant une forme sphérique et un diamètre de 0,5 à 10 mm sont choisis en tant que corps EPS.

5. Procédé selon l'une quelconque des revendications 1 à 4, **caractérisé en ce qu'**une poudre ferrimagnétique ayant une taille de particule de 200 nm à 15 µm est choisie en tant que poudre ferrimagnétique.

6. Absorbeur pour micro-ondes, fabriqué par un procédé selon l'une quelconque des revendications 1 à 5, constitué d'un garnissage de corps EPS, qui sont revêtus avec une poudre ferrimagnétique dans une matrice polymère et dont la structure externe correspond à un moule technologiquement utilisé.

7. Absorbeur selon la revendication 6, **caractérisé en ce que** l'absorbeur comporte une grille de support plate (1) constituée de nids d'abeilles anguleux ou tubulaires, dans laquelle les corps EPS (3), qui sont revêtus avec une poudre ferrimagnétique dans une matrice polymère, sont collés en au moins une monocouche.

8. Absorbeur selon la revendication 6 ou 7, **caractérisé en ce que** l'absorbeur est un élément pour la réduction de la masse et de la conductivité thermique ou pour l'augmentation de la capacité d'absorption acoustique d'un produit final.
